# EUROPEAN PATENT SPECIFICATION

(11) **EP 1 675 334 B1**
(45) Date of publication and mention of the grant of the patent: **11.07.2007**
(21) Application number: 05257716.0
(22) Date of filing: 15.12.2005
(51) Int. Cl.: H04L 12/58

(54) **Storing anti-spam black lists**
Speichern von schwarze Listen Anti-Spams
Enregistrement de listes noires pour la prévention de spam

(30) Priority: 21.12.2004 US 18899
(43) Date of publication of application: 28.06.2006
(73) Proprietor: LUCENT TECHNOLOGIES INC., Murray Hill, New Jersey 07974-0636 (US)
(72) Inventor: Yigang, Cai, Naperville, Illinois 60565 (US); Shehryar S. Qutub, Hoffman Estates, Illinois 60194 (US); Alok, Sharma, Lisle, Illinois 60532 (US)
(74) Representative: Sarup, David Alexander

(56) References cited:
- EP-A- 0 833 492
- EP-A- 1 139 608
- WO-A-01/01264
- WO-A-01/10089

## Description

### Technical Field

This invention relates to the storing of black lists for use in detecting and blocking unwanted (spam) messages.

### Background of the Invention

With the advent of the Internet, it has become easy to send messages to a large number of destinations at little or no cost to the sender. The messages include the short messages of short message service. These messages include unsolicited and unwanted messages (spam) which are a nuisance to the receiver of the message who has to clear the message and determine whether it is of any importance. Further, they are a nuisance to the carrier of the telecommunications network used for transmitting the message, not only because they present a customer relations problem with respect to irate customers who are flooded with spam, but also because these messages, for which there is usually little or no revenue, use network resources. An illustration of the seriousness of this problem is given by the following two statistics. In China in 2003, two trillion short message service (SMS) messages were sent over the Chinese telecommunications network; of these messages, an estimated three quarters were spam messages. The second statistics is that in the United States an estimated 85-90% of e-mail messages are spam.

A number of arrangements have been proposed and many implemented for cutting down on the number of delivered spam messages. Various arrangements have been proposed for analyzing messages prior to delivering them. According to one arrangement, if the calling party is not one of a pre-selected group specified by the called party, the message is blocked. Spam messages can also be intercepted by permitting a called party to specify that no messages destined for more than N. destinations are to be delivered.

A called party can refuse to publicize his/her telephone number or e-mail address. In addition to the obvious disadvantages of not allowing callers to look up the telephone number or e-mail address of the called party, such arrangements are likely to be ineffective. An unlisted e-mail address can be detected by a sophisticated hacker from the IP network, for example, by monitoring message headers at a router. An unlisted called number simply invites the caller to send messages to all 10,000 telephone numbers of an office code; as mentioned above, this is very easy with present arrangements for sending messages to a plurality of destinations.

Most spam messages are detected through the use of black lists, i.e., lists of sources from which individual destination terminals are unwilling to accept messages. Determination of whether a message is a spam message is a difficult problem which frequently requires a very large amount of data processing. Therefore, it would be desirable to have an arrangement in which, if a source is on a black list, that the message can be quickly identified as being a spam message.

European Patent Application EP-A,139608 discloses arrangements for filtering unwanted messages based on the profile attributes of the message and the intended recipient.

International Publication No. WO 01/01264 A discloses arrangements for blocking electronic messages from junk e-mail senders, forwarding urgent electronic messages to pagers, forwarding electronic messages from a first list of senders to a first e-mail account and from another list of senders to another account.

### Summary of the Invention

A method and apparatus according to the present invention are set out in the independent claims, to which the reader is now referred. Preferred features are laid out in the dependent claims.

An advance is made over the teachings of the prior art in accordance with this invention wherein black lists are stored in the servers such as the home location register (HLR) of mobile networks or the home subscriber server (HSS) of the Internet. These servers are used to identify the telecommunications terminal associated with a caller-provided address such as a telephone number or an Internet identifier, or, in the case of short message service, a mobile directory number. Since it is a necessary step as part of the process of setting up a message connection to identify the location of a called party, thus requiring an access to a location server such as the HLR or HSS, it is advantageous to use that opportunity to find out if the caller's identity is on a black list stored along with other data for the called party.

When a network node (such as a gateway mobile switching center, an internetwork mobile switching center, an SMS center, a Multimedia Message Service (MMS) center, an e-mail server, or an IP router) receives an SMS message from any network (SS7 or IP), it needs to check the location server for validating the sender and find out a routing address for an SMS receiver. The inquiry message will contain sender and/or receiver address information. The location server then screens the inquiry message using the black list to see if one or more of the sender's identities fall into the black list; if so, the location server will respond to the originating network node with an error message indicating that the source is a source of spam short messages or messages. The network node can then generate a call detail record associated with the spam SMS. A spam SMS message may be deleted upon completion of analysis or stored for record keeping. If the screening is successful and no spam indication is found, the location server will perform the normal location service and return the acknowledgment to the requesting network node.

### Brief Description of the Drawing(s)

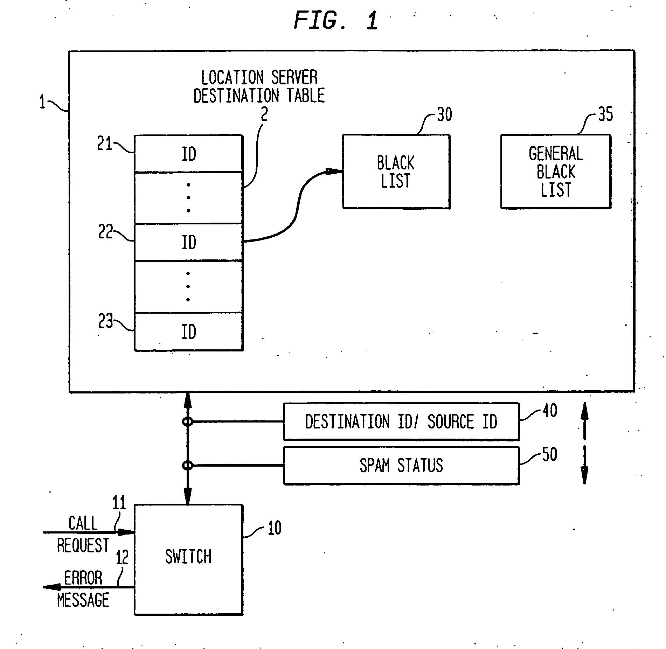

FIG. 1 is a block diagram illustrating the operation of Applicants' invention.

### Detailed Description

FIG. 1 is a diagram showing the operation of Applicants' invention. A switch 10 (not only mobile or landline switch, but also gateway switch, interworking switch, SMSC, MMSC, email server) receives a call request message 11. The call request message may come from a mobile switching center. At any rate, the switch 10 is the switch which makes a request to a location server 1 for information on how to complete the call including an indication of the present location of the called party. The location server can be a home location register, in the case of a mobile or short message service network, or it can be a home subscriber server in an Internet Protocol network. In addition to performing its normal functions, the location server, in accordance with the principles of Applicants' invention, contains black lists for message sources which have been identified as generating spam messages. The location server contains a list 2 of destination identities 21,...,22,...,23. A location server receives a request message 40 including a source and destination identity. The location server checks the destination identity table, in this case, entry 22, which includes a pointer to the black list of the destination specified in message 40. If the result of a check of black list 30, the black list pointed to by the pointer in destination identification entry 22, then the location server will generate a spam status message 50 indicating that the source is a spam source.

In accordance with one feature of Applicants' invention, the location server also stores a general black list 35 of sources which are known to be sources of spam messages and whose spam messages should be blocked. If the source specified in message 40 is on the list of such sources stored in table 35, then a spam status message 50 is generated indicating this fact.

The spam status message 50 is part of a longer message (not shown) giving the full response of the location server to the location server request 40.

If the destination identity is not found in table 2, or the source is not found in either table 30 or 35, then the spam status message 50 will indicate that from the point of view of black lists the spam status is satisfactory. Other spam tests can then be performed. Advantageously, the black list check performed in this way can save the utilization of processing resources for performing more complex spam checks in the case that a black list entry has been found.

If a black list entry has been found, the switch 10 can send an error message 12 to the source of the call request or can simply block further completion of the message connection. Further, depending on the spam status and on additional information included in a black list entry, the switch may make a record of the spam message and/or generate a report to the telecommunications carrier. Switch 10 and network management may perform further anti-spam analysis on spam source and spam messages.

While this description has been aimed primarily at short message service and Internet connections, it can also be used for regular mobile message connections, and for voice connections including voice over Internet Protocol connections and voice mobile connections. The black list entry can contain different sources, such as individual source (Mobile Directory Number (MDN), Mobile Identification Number (MIN) email address, IP address and Network or System sources (such as network ID, Domain Name, Application Server ID (and address)). The black list entry can also contain service types, message types, content types and other information as to be black listed; for example, short message service calls may be blocked but mobile voice connections allowed (or vice versa). In the case of the e-mail address, the black list contains the identity of the e-mail addressee, not only the e-mail server.

## Claims

1. A method of blocking unwanted message or voice connections in a telecommunications network comprising the steps of:
receiving an incoming message or a call request (11) in a switch (10) of said telecommunications network;
**Characterized in that** said method further comprises the steps of:
requesting (40) the service of a location server (1) to identify a location of a called party of said message or call request;
in said location server, checking whether a source of said message or call request is on a black list (30, 35) of sources for which connections are to be denied;
responsive to finding that said destination is on said black list, sending a response message (50) to said switch to deny establishment of a connection specified in said incoming message or call request.

2. The method of claim 1 wherein said black list (30) comprises lists of sources for which connections to specific destinations are to be denied.

3. The method of claim 1 wherein said black list of sources comprises one or more lists (35) of sources for which connections to all destinations are to be denied.

4. The method of claim 1 in which said location server is a home location register of a mobile telecommunications system.

5. The method of claim 1 wherein said location server is a home subscriber server of the Internet.

6. Apparatus for blocking unwanted message or voice connections in a telecommunications network, said apparatus comprising:
means for receiving an incoming message or a call request (11) in a switch (10) of said telecommunications network;
**Characterized in that** said apparatus further comprises:
a location server (1) for identifying a location of a called party of said message or call request;
in said location server, means for checking whether a source of said call request is on a black list (30, 35) of sources for which connections are to be denied;
responsive to finding that said destination is on said black list, means for sending a response message (50) to said switch to deny establishment of a connection specified in said call request.

7. The apparatus of claim 6 wherein said black list (30) comprises lists of sources for which connections to specific destinations are to be denied.

8. The apparatus of claim 6 wherein said black list of sources comprises one or more lists (35) of sources for which connections to all destinations are to be denied.

9. The apparatus of claim 6 in which said location server is a home location register of a mobile telecommunications system.

10. The apparatus of claim 6 wherein said location server is a home subscriber server of the Internet.

## Patentansprüche

1. Verfahren zum Blockieren unerwünschter Nachrichten- oder Voice-Verbindungen in einem Telekommunikationsnetz, mit den folgenden Schritten:
Empfangen einer ankommenden Nachricht oder Verbindungsanforderung (11) in einer Vermittlung (10) des Telekommunikationsnetzes;
**dadurch gekennzeichnet, daß** das Verfahren ferner die folgenden Schritte umfaßt:
Anfordern (40) der Dienste eines Standortservers (1), um einen Standort eines angerufenen Teilnehmers der Nachricht oder Verbindungsanforderung zu identifizieren;
in dem Standortserver Prüfen, ob sich eine Quelle der Nachricht oder Verbindungsanforderung in einer schwarzen Liste (30, 35) von Quellen befindet, für die Verbindungen zu verweigern sind;
wenn gefunden wird, daß sich das Ziel in der schwarzen Liste befindet, Senden einer Antwortnachricht (50) zu der Vermittlung, um die Herstellung einer in der ankommenden Nachricht oder Verbindungsanforderung spezifizierten Verbindung zu verweigern.

2. Verfahren nach Anspruch 1, wobei die schwarze Liste (30) Listen von Quellen umfaßt, für die Verbindungen zu spezifischen Zielen zu verweigern sind.

3. Verfahren nach Anspruch 1, wobei die schwarze Liste von Quellen eine oder mehrere Listen (35) von Quellen umfaßt, für die Verbindungen zu allen Zielen zu verweigern sind.

4. Verfahren nach Anspruch 1, wobei der Standortserver ein Heimatregister eines Mobiltelekommunikationssystems ist.

5. Verfahren nach Anspruch 1, wobei der Standortserver ein Home Subscriber Server des Internet ist.

6. Vorrichtung zum Blockieren unerwünschter Nachrichten- oder Voice-Verbindungen in einem Telekommunikationsnetz, wobei die Vorrichtung folgendes umfaßt:
ein Mittel zum Empfangen einer ankommenden Nachricht oder einer Verbindungsanforderung (11) in einer Vermittlung (10) des Telekommunikationsnetzes;
**dadurch gekennzeichnet, daß** die Vorrichtung ferner folgendes umfaßt:
einen Standortserver (1) zum Identifizieren eines Standorts eines angerufenen Teilnehmers der Nachricht oder Verbindungsanforderung;
in dem Standortserver ein Mittel zum Prüfen, ob sich eine Quelle der Verbindungsanforderung in einer schwarzen Liste (30, 35) von Quellen befindet, für die Verbindungen zu verweigern sind;
ein Mittel zum Senden einer Antwortnachricht (50) zu der Vermittlung, um die Herstellung einer in der Verbindungsanforderung spezifizierten Verbindung zu verweigern, wenn gefunden wird, daß sich das Ziel in der schwarzen Liste befindet.

7. Vorrichtung nach Anspruch 6, wobei die schwarze Liste (30) Listen von Quellen umfaßt, für die Verbindungen zu spezifischen Zielen zu verweigern sind.

8. Vorrichtung nach Anspruch 6, wobei die schwarze Liste von Quellen eine oder mehrere Listen (35) von Quellen umfassen, für die Verbindungen zu allen Zielen zu verweigern sind.

9. Vorrichtung nach Anspruch 6, bei der der Standortserver ein Heimatregister eines Mobiltelekommunikationssystems ist.

10. Vorrichtung nach Anspruch 6, wobei der Standortserver ein Home Subscriber Server des Internet ist.

## Revendications

1. Procédé de blocage de connexions vocales ou de messages indésirables dans un réseau de télécommunication comprenant les étapes de :
réception d'un message entrant ou d'une demande d'appel (11) dans un commutateur (10) dudit réseau de télécommunication ;
**caractérisé en ce que** ledit procédé comprend en outre les étapes de :
demande (40) au service d'un serveur de localisation (1) d'identifier une localisation d'un appelé dudit message ou de ladite demande d'appel ;
dans ledit serveur de localisation, vérification si une source dudit message ou de ladite demande d'appel est sur une liste noire (30, 35) de sources pour lesquelles des connexions doivent être refusées ;
en réaction à la conclusion que ladite destination est sur ladite liste noire, envoi d'un message de réponse (50) audit commutateur pour refuser l'établissement d'une connexion spécifiée dans ledit message entrant ou ladite demande d'appel.

2. Procédé selon la revendication 1 dans lequel ladite liste noire (30) comprend des listes de sources pour lesquelles des connexions à des destinations spécifiques doivent être refusées.

3. Procédé selon la revendication 1 dans lequel ladite liste noire de sources comprend une ou plusieurs listes (35) de sources pour lesquelles des connexions à toutes les destinations doivent être refusées.

4. Procédé selon la revendication 1 dans lequel ledit serveur de localisation est un enregistreur de localisation nominal d'un système de télécommunication mobile.

5. Procédé selon la revendication 1 dans lequel ledit serveur de localisation est un serveur d'abonné nominal de l'Internet.

6. Appareil pour bloquer des connexions vocales ou de messages indésirables dans un réseau de télécommunications, ledit appareil comprenant :
des moyens de réception d'un message entrant ou d'une demande d'appel (11) dans un commutateur (10) dudit réseau de télécommunication ;
**caractérisé en ce que** ledit appareil comprend en outre :
un serveur de localisation (1) pour identifier une localisation d'un appelé dudit message ou de ladite demande d'appel ;
dans ledit serveur de localisation, des moyens de vérification si une source de ladite demande d'appel est sur une liste noire (30, 35) de sources pour lesquelles des connexions doivent être refusées ;
en réaction à la conclusion que ladite destination est sur ladite liste noire, des moyens d'envoi d'un message de réponse (50) audit commutateur pour refuser l'établissement d'une connexion spécifiée dans ladite demande d'appel.

7. Appareil selon la revendication 6 dans lequel ladite liste noire (30) comprend des listes de sources pour lesquelles des connexions à des destinations spécifiques doivent être refusées.

8. Appareil selon la revendication 6 dans lequel ladite liste noire de sources comprend une ou plusieurs listes (35) de sources pour lesquelles des connexions à toutes les destinations doivent être refusées.

9. Appareil selon la revendication 6 dans lequel ledit serveur de localisation est un enregistreur de localisation nominal d'un système de télécommunication mobile.

10. Appareil selon la revendication 6 dans lequel ledit serveur de localisation est un serveur d'abonné nominal de l'Internet.
